# DEMANDE DE BREVET EUROPEEN

(11) **EP 2 955 976 A1**
(43) Date de publication de la demande: **16.12.2015**
(21) Numéro de dépôt: 14172152.2
(22) Date de dépôt: 12.06.2014
(51) Int. Cl.: H05B 3/84

(54) **Vitrage chauffant**

(71) Demandeur: AGC Glass Europe, 1348 Louvain-la-Neuve (BE)
(72) Inventeur: Kazik, Zoltan, 1800 Vilvoorde (BE); Masschelein, Peter, 3040 Huldenberg (BE)
(74) Mandataire: Le Vaguerèse, Sylvain Jacques

(57) **Abrégé**

L'invention concerne un vitrage automobile feuilleté composé de deux feuilles de verre réunies au moyen d'une feuille intercalaire, vitrage comportant un système couches chauffantes appliqué sur une des feuilles et sur le bord de la même feuille une bande de masquage sensiblement opaque, en contact avec la feuille de verre, le système de couches conductrices chauffantes recouvrant au moins en partie la bande de masquage, vitrage qui comporte encore des busbars d'alimentation électrique en contact avec le système de couches dans la partie recouvrant la bande de masquage, caractérisé en ce que la bande de masquage présente une rugosité qui n'est pas supérieure à 0,5µ et de préférence pas supérieure à 0,1µ.

## Description

L'invention concerne les vitrages automobiles comportant un système de couches conductrices destiné au chauffage du vitrage. De manière plus précise l'invention est relative à l'amélioration des performances de ces vitrages par les conditions dans lesquelles le système de couches est alimenté.

En pratique les vitrages chauffants à couches sont raccordés à l'alimentation électrique au moyen de conducteurs appliqués sur les bords du vitrage et en contact avec les couches. A l'expérience le contact électrique entre les conducteurs en question, désignés sous le nom de «busbars», et le système de couches n'est pas toujours assuré dans les meilleures conditions. Les irrégularités dans ce contact ont pour conséquence une distribution de la puissance qui n'est pas optimisée d'une part, et d'autre part la formation de zones privilégiées pour le passage du courant, crée ce qui est désigné sous le nom de «points chauds». Même si ces derniers restent dans des températures supportables par les matériaux entrant dans la constitution du vitrage, la distribution non homogène de la puissance limite les performances atteintes.

Dans les conditions les plus usuelles la tension applicable étant limitée - le plus généralement à 12-14v pour les véhicules particuliers- et la résistance des couches ne pouvant pas être abaissée pour des raisons d'optique liées à la transmission lumineuse de ces vitrages, la puissance effective disponible est limitée. Il est nécessaire d'approcher des conditions qui visent à consacrer la quasi-totalité de cette puissance au chauffage du vitrage. Toute perte de puissance limite les performances de chauffage. Cette perte de puissance est particulièrement gênante pour les vitrages présentant les plus grandes dimensions. Dans les véhicules les vitrages les plus exigeants sont les pare-brise. Dans la suite, l'invention est décrite en référence aux pare-brise étant entendu que les propositions s'appliquent aussi aux vitrages de dimensions plus modestes.

La structure des vitrages chauffants, en dehors des couches et des busbars, comporte le plus généralement des éléments destinés à masquer les éléments inesthétiques. Pour les vitrages collés, le cordon de colle irrégulier serait visible de l'extérieur sauf à opacifier la zone de collage correspondante située nécessairement sur le bord du vitrage. Les busbars font aussi partie des éléments qui doivent être masqués.

Le masquage des bords du vitrage est traditionnellement réalisé par application d'une composition d'émail qui opacifie en pratique complètement cette zone du vitrage. La transmission lumineuse dans la zone revêtue est par exemple inférieure à 1%, et habituellement peut être inférieure à 0,1%.

L'application de la composition émaillée est traditionnellement réalisée par une technique de sérigraphie. L'application faite, la composition est cuite pour constituer la couche d'émail. Cette «cuisson» est soit en une seule soit en deux étapes. Dans le second, celui suivi le plus souvent dans la production des vitrages feuilletés, une première cuisson conduit à l'élimination des solvants qui stabilise momentanément le motif imprimé, une seconde cuisson conduit à la fusion de la fritte présente dans la composition. Ces deux étapes correspondent le plus souvent à deux moments de la préparation des vitrages. Le premier est effectué sur la feuille sur laquelle la composition est appliquée, le second correspond avantageusement au traitement thermique de bombage.

Dans les vitrages feuilletés, notamment les pare-brise, l'émail de masquage est appliqué nécessairement au moins sur la feuille tournée vers l'extérieur du véhicule. Le système de couches chauffantes est aussi avantageusement appliqué sur cette feuille pour optimiser le chauffage nécessaire pour le dégivrage. Les busbars sont disposés sur le système de couches conductrices en regard des zones émaillées. L'ensemble de ces éléments se situe sur la face de la feuille en contact avec l'intercalaire thermoplastique, la face 2 dans la désignation traditionnelle qui numérote les faces des feuilles depuis l'extérieur du vitrage.

Les inventeurs ont analysé le comportement de la liaison entre le système de couches conductrices et les busbars. Ils ont montré que la puissance délivrée aux busbars n'était pas complètement transmise aux couches conductrices. Il en résulte une perte de puissance préjudiciable aux performances de chauffage du vitrage. L'étude de l'origine de cette perte de puissance a permis d'identifier certains facteurs dont la prise en compte peut conduire à une amélioration de ces performances.

L'invention résulte de cette identification et de la façon de remédier aux causes de cette perte de puissance. L'invention est l'objet de la revendication 1 qui se rapporte à l'influence de la rugosité.

Les causes précises qui font que la rugosité du support sur lequel repose le système de couches influe sur la puissance effective du chauffage, ne sont pas pleinement déterminées. Une hypothèse est que la rugosité conduit à un système de couches non uniforme notamment dans son épaisseur. Une autre hypothèse est que le contact entre le busbar et le système de couches est d'autant mieux établi que la rugosité est plus réduite. Les deux mécanismes peuvent éventuellement intervenir simultanément.

Indépendamment de ces hypothèses l'expérience confirme l'importance de ce facteur. Les éléments qui altèrent l'homogénéité de la conduction électrique se traduisent nécessairement par des variations locales de l'intensité, source de perte de puissance effective disponible pour le système de couches appliqué sur la feuille de verre à chauffer.

L'obtention de bandes de masquage dont la rugosité superficielle est de moins de 0,5*µ*, et de préférence inférieure à 0,1*µ*, et de façon particulièrement préférée inférieure à 0,05*µ*, est fonction des techniques de constitution de ces bandes.

La rugosité peut être définie de plusieurs façons. Dans le présente demande on choisit la rugosité moyenne mesurée depuis une ligne de base, dite rugosité arithmétique Ra.

Les techniques habituelles de sérigraphie, n'offrent pas des surfaces ayant une rugosité de l'ordre indiqué ci-dessus.

Une amélioration de la rugosité peut être obtenu en choisissant des écrans dont la surface d'enduction est elle-même très peu rugueuse, tels que ceux commercialisés par la société SEFAR avec les références PCF. Leur rugosité n'est pas ordinairement inférieure à 2 ou 3*µ*, mais la rugosité de la surface d'enduction de l'écran, ne correspond pas exactement à celle de la couche produite. Un lissage naturel peut être obtenu par le jeu de la tension superficielle dans la couche appliquée si la viscosité est appropriée.

Les moyens utilisés ne sont pas les seuls entrant dans la détermination de la rugosité. Les compositions d'émail renferment des particules solides de fritte et de produits opacifiant (particules de carbone et/ou pigments). Si les particules de fritte sont fondues dans l'émail lors de la cuisson, les autres particules demeurent sans grande modification, et même enrobées dans la fritte fondue, peuvent encore contribuer à la rugosité de la couche. Antérieurement dans les techniques de sérigraphie mises en oeuvre pour la constitution des motifs de masquage, les considérations relatives à l'opacité étaient privilégiées, conduisant à des pigments de dimensions relativement importantes de l'ordre de plusieurs dizaines de micromètres. Pour conduire à une rugosité répondant aux conditions de l'invention il est préférable que les particules incluses dans les compositions d'émail ne soient pas de dimensions très supérieures à la rugosité recherchée. Des dimensions préférées sont donc inférieures à 5*µ*, et de façon particulièrement préférées inférieures à 3*µ*.

Par ailleurs les techniques de sérigraphie conduisent à des revêtements qui présentent une certaine épaisseur. A titre indicatif dans les applications traditionnelles les couches émaillées peuvent avoir une épaisseur de 20 à 150*µ*. Ces épaisseurs pour les raisons exposées plus loin ont aussi une incidence sur le comportement des couches conductrices qui recouvrent les bandes émaillées.

En dehors d'une possible amélioration des techniques de sérigraphie, les inventeurs proposent aussi de mettre en oeuvre d'autres moyens d'application des compositions de masquage, et notamment l'application des compositions selon une technique, dite à jet d'encre («ink-jet»). Ce mode de projection permet d'échapper à certaines contraintes liées au mode sérigraphie. Les gouttelettes sont de dimensions bien inférieures aux ouvertures des mailles des écrans de sérigraphie. Par ailleurs l'absence de contact entre l'applicateur et le substrat évite toute empreinte de cet applicateur sur la couche constituée dont les caractéristiques ne dépendent alors que de celles de la composition projetée.

Pour permettre une bonne utilisation des buses de projection, les compositions doivent nécessairement renfermer des particules de dimensions limitées. Si la nature des constituants des compositions de masquage peut s'apparenter à celle des compositions de sérigraphie, sous réserve d'un ajustement notamment de la teneur en liants pour maintenir une viscosité compatible avec ce mode d'application, les dimensions des particules doivent être ajustées non seulement pour permettre l'utilisation des buses sans risque d'obstruction de celles-ci, mais aussi pour l'obtention d'une viscosité adéquate. Les particules des compositions utilisées selon l'invention sont avantageusement de moins de 1*µ*, et de préférence de moins de 0,5*µ*.

Des techniques de formation de bandes de masquage par jet d'encre ont été proposées antérieurement, notamment dans la publication WO 2005/00348 de la demanderesse. Les techniques décrites étaient néanmoins orientées de manière particulière vers le choix de compositions spécifiques permettant un recyclage du verre revêtu. La détermination des modalités d'application compte tenu des compositions en question, visait essentiellement l'obtention d'une opacification suffisante. La mise en oeuvre de ces couches de masquage et leur contact avec les couches conductrices, qui sont l'objet de la présente invention étaient absentes de cet art antérieur.

Au-delà des caractéristiques de rugosité des bandes de masquage, les inventeurs ont encore recherché la réduction des pertes de puissance dans l'amélioration de la transition à la limite de ces bandes. Le système de couches conductrices est constitué d'une superposition de couches métalliques et diélectriques. Pour atteindre les meilleures conductivités, autrement dit la résistance la plus faible avec une bonne transmission lumineuse et une coloration suffisamment neutre, les systèmes sont à l'heure actuelle composés de plusieurs couches métalliques, notamment d'argent. Ces systèmes de couches, indépendamment du nombre de ces dernières, restent d'une épaisseur totale limitée, ne dépassant pas en règle générale 0,3*µ*. Dans tous les cas l'épaisseur de ces couches est très inférieure à celle des bandes de masquage traditionnelles comme indiqué plus haut. La continuité des couches conductrices appliquées à la fois sur les bandes de masquage et sur la feuille de verre, ne peut être assurée convenablement au bord de ces bandes.

Pour résoudre ce problème les inventeurs proposent de constituer des bandes de masquage dont le bord tourné vers le centre de la feuille est d'épaisseur décroissant progressivement.

La structure proposée peut être obtenue dans les techniques de sérigraphie par exemple en utilisant un écran présentant un maillage variable. L'usage de la sérigraphie reste néanmoins tributaire d'une épaisseur qui ne peut être réduite de façon parfaitement continue. Il reste au bord de la bande une épaisseur d'un ordre de grandeur très supérieur à celui des couches. La difficulté est donc amoindrie mais pas entièrement écartée.

La technique d'application par jet d'encre offre des possibilités accrues de modulation de l'épaisseur. Ceci est possible par une variation progressive de la densité des gouttelettes projetées par unité de surface. Il est aussi possible de procéder, dans des conditions constantes de projection, à la superposition d'applications correspondant à une fraction de l'épaisseur totale recherchée en réduisant progressivement la largeur appliquée, chaque application se faisant en retrait par rapport à la limite de l'application précédente.

L'invention est décrite de façon détaillée dans la suite en faisant référence aux figures dans lesquelles :
- la figure 1 présente en coupe schématique un bord de feuille de verre comportant une couche conductrice ;
- la figure 2 illustre de façon schématique le détail d'un produit de l'art antérieur ;
- la figure 3 est une représentation analogue à celle de la figure 2 selon des modalités de l'invention.

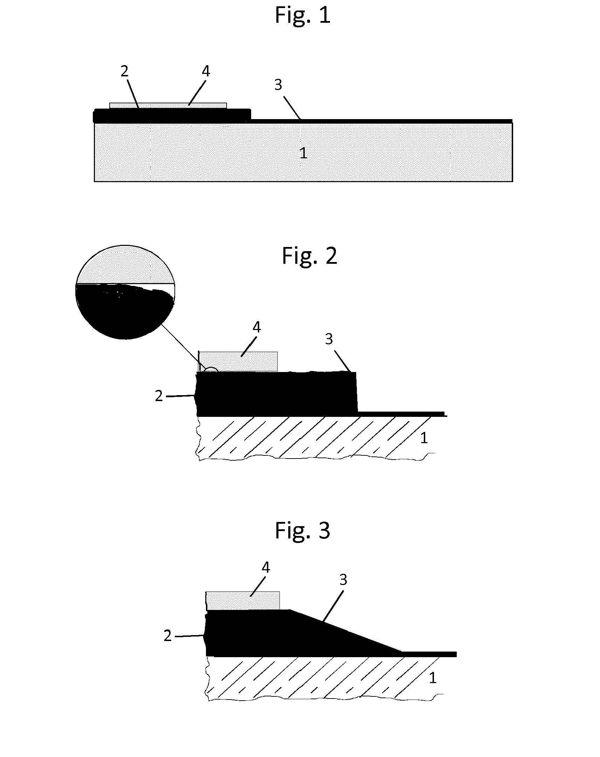

Dans toutes les figures le rapport des dimensions n'est pas respecté pour la commodité de l'interprétation. Aux figures 1 à 3, une seule feuille de verre est présentée. Les dispositions entreprises concernent les vitrages feuilletés comportant en plus une deuxième feuille de verre et un intercalaire d'assemblage constitué d'un matériau thermoplastique, le plus souvent de PVB (poly-vinyl-butyral).

La figure 1 présente de façon typique une feuille de verre 1 qui comporte un système de couches conductrices 3. Ces couches sont appliquées sur la feuille préalablement revêtue sur son bord par un émail de masquage 2.

L'alimentation électrique de ce système de couches est réalisée au moyen d'un busbar 4. Le busbar est le plus fréquemment constitué d'un ruban métallique, notamment de cuivre, de faible épaisseur et de quelques millimètres de largeur. La conductivité du busbar est très élevée en comparaison de celle des couches conductrices qui pour les meilleures, dans des conditions de transmission lumineuse élevée, présentent une résistance qui n'est pas inférieure à environ 1Ω/□.

La représentation de la figure 1 correspond dans un vitrage feuilleté final, à la feuille tournée vers l'extérieur du véhicule. Pour masquer les busbars, mais aussi les cordons de colle qui fixent la deuxième feuille aux éléments de carrosserie du véhicule, une bande opaque 2 est appliquée sur le bord de la feuille 1 sur la face qui comporte aussi le système de couches conductrices. La bande de masquage est en position 2 comme le système de couches 3 qui recouvre cette bande. Le busbar 4 est appliqué sur la couche à l'endroit où celle-ci recouvre la bande de masquage.

L'ordre des éléments superposés sur la feuille est commandé par leur fonction respective.

L'application des systèmes de couches est effectuée par dépôt sous vide. Bien que de très faible épaisseurs, les couches constituées sont d'une grande régularité sur toute la surface de la feuille revêtue. Cette régularité concerne notamment l'épaisseur de ces couches. L'application sur la surface de la feuille n'altère pas cette régularité, ces surfaces offrant une rugosité extrêmement faible de l'ordre de 0,02*µ* pour les feuilles ordinaires produites par flottage sur bain d'étain fondu.

L'application des bandes de masquage dans les conditions habituelles des techniques de sérigraphie, conduit à une couche émaillée dont la surface est beaucoup moins lisse que celle de la feuille de verre. Comme indiqué précédemment même avec les écrans antérieurs les mieux adaptés, la rugosité de la surface des bandes émaillées n'est pas inférieure à 2 ou 3*µ*. Cette rugosité est à comparer avec les épaisseurs usuelles des couches conductrices généralement inférieures à 0,1*µ*. Autrement dit même si l'application de ces couches par les techniques de dépôt sous vide permet de bien recouvrir la surface des bandes de masquage, sans lacunes, les couches déposées présentent une épaisseur irrégulière et une rugosité certaine dérivée de celle de ces bandes de masquage sur lesquelles elles sont appliquées, et par suite une conduction qui n'est pas uniforme notamment en raison des inhomogénéités d'épaisseur.

Par ailleurs les raisons évoquées ci-dessus, le contact des couches conductrices avec le busbar si celui-ci est constitué d'un ruban métallique ne peut être parfaitement assuré. La figure 2 illustre de manière très schématique, les défauts liés à la rugosité de la bande de masquage.

Ces défauts ont pour conséquence de concentrer la circulation du courant dans la couche de manière irrégulière, conduisant aux pertes de puissance indiquées dans la présentation de l'art antérieur.

Une comparaison est réalisée entre un vitrage dont les bandes de masquage sont réalisées par sérigraphie de manière traditionnelle, et un vitrage dont la bande de masquage est obtenue par jet d'encre.

Dans les deux cas le support est constitué d'une feuille de verre clair de 2,1mm d'épaisseur. Les couches conductrices sont telles que décrites dans la publication WO 2011/147875. Elles comportent trois couches d'argent.

La rugosité Ra est mesurée au moyen d'un appareil «Handysurf TE H 042». Pour les couches sérigraphiées la mesure moyenne est de 0,69*µ*. Pour les couches appliquées par une technique de jet d'encre la rugosité obtenue est sensiblement moindre. Sans avoir optimisé tous les facteurs qui participent à son établissement on obtient avec une composition qui n'est pas spécifique, produite par la société Johson-Mattey (JM1L6027), une rugosité moyenne de l'ordre de 0,14*µ*.

On mesure également la résistivité des couches directement appliquées sur le verre, et celle de de la couche située sur la bande de masquage. La mesure est effectuée au moyen d'un appareil «Stratometer».

Dans les conditions de l'essai la mesure de la résistance de la couche sur le verre seul s'établit à 0,82Ω/□. Sur la bande de masquage d'émail sérigraphiée traditionnelle, cette résistance est mesurée à 320Ω/□, et celle de la couche conductrice appliquée sur la bande émaillée est de l'ordre de 4Ω/□. Sur la bande de masquage produite par jet d'encre la résistance de la couche est d'environ 2Ω/□.

La seule présence d'une couche de masquage dont la rugosité est plus faible permet de réduire de moitié la résistance de la couche à son contact montrant clairement l'influence de cette rugosité sur les condition d'alimentation de la couche chauffante. La réduction de la résistance imposée dans la partie de la couche au contact de busbars est une facteur qui permet d'améliorer sensiblement l'efficacité du chauffage.

Pour améliorer encore cette efficacité la bande de masquage est de préférence d'épaisseur moindre pour minimiser l'effet de seuil lorsque le système de couches franchit ce seuil en passant de la bande de masquage à la feuille de verre. Ce même effet est aussi limité en produisant une bande de masquage dont l'épaisseur est décroissante sur le côté de cette bande tournée vers l'intérieur de la feuille. La figure 3 illustre de façon schématique une telle décroissance. Celle-ci n'est pas nécessairement continue et régulière. En cas de superposition de couches produites par jet d'encre par exemple les limites de chaque couche peuvent conduire à un étagement sur le bord chaque couche présentant un seuil limité à l'épaisseur de la couche en question. Par ailleurs si la composition projetée présente un bonne affinité avec le verre et avec les couches précédemment déposées, une épaisseur décroissant de façon progressive peut être pratiquement obtenue facilitant la continuité de la couche conductrice au passage de la bande de masquage à la face de la feuille de verre.

## Revendications

1. Vitrage automobile feuilleté composé de deux feuilles de verre réunies au moyen d'une feuille intercalaire, vitrage comportant un système couches chauffantes appliqué sur une des feuilles et sur le bord de la même feuille une bande de masquage sensiblement opaque, en contact avec la feuille de verre, le système de couches conductrices chauffantes recouvrant au moins en partie la bande de masquage, vitrage qui comporte encore des busbars d'alimentation électrique en contact avec le système de couches dans la partie recouvrant la bande de masquage, **caractérisé en ce que** la bande de masquage présente une rugosité qui n'est pas supérieure à 0,5*µ* et de préférence pas supérieure à 0,1*µ*.

2. Vitrage selon la revendication 1 dans lequel la bande de masquage est constituée d'un émail renfermant des pigments, ces derniers sous forme de particules dont la granulométrie moyenne n'est pas supérieure à 5*µ* et de préférence pas supérieure à 3*µ*.

3. Vitrage selon l'une des revendications précédentes dans lequel le système de couches conductrices chauffantes est formé par pulvérisation cathodique et comprend un ensemble de couches métalliques et de couches diélectriques, l'ensemble présentant une épaisseur qui n'est pas supérieure à 0,1*µ*.

4. Vitrage selon la revendication 3 dans lequel les couches métalliques sont à base d'argent et au nombre de deux ou trois.

5. Vitrage selon l'une des revendications précédentes dans lequel la bande de masquage présente une opacité telle que la transmission lumineuse du vitrage à travers cette bande reste inférieure à 0,1%.

6. Vitrage selon l'une des revendications précédentes dans lequel la bande de masquage présente transversalement une épaisseur progressivement décroissante sur son bord tourné vers le centre de la feuille de verre.

7. Vitrage selon l'une des revendications précédentes dans lequel la bande de masquage est appliquée sur la feuille de verre par une technique de jet d'encre.

8. Vitrage selon la revendication 7 dans lequel plusieurs applications sont faites pour constituer la bande de masquage, les applications successives se faisant transversalement en retrait sur le bord tourné vers le centre de la feuille de verre, retrait par rapport à l'application précédente.

9. Vitrage selon l'une des revendications précédentes dans lequel les busbars sont constitués de minces rubans métalliques.

10. Vitrage selon l'une des revendications précédentes dans lequel la feuille de verre sur laquelle le système de couches conductrices chauffantes est appliqué est la feuille extérieure du vitrage feuilleté, le système étant appliqué en face 2.
